# EUROPEAN PATENT APPLICATION

(11) **EP 4 803 683 A1**
(43) Date of publication of application: **09.09.2026**
(21) Application number: 24885779.9
(22) Date of filing: 30.10.2024
(51) Int. Cl.: D05B 81/00, D05B 19/04, D05B 19/12, G05B 19/418

(54) **SEWING MANAGEMENT SYSTEM AND SEWING MANAGEMENT METHOD**

(30) Priority: 01.11.2023 JP 2023187515; 01.11.2023 JP 2023187516; 16.11.2023 JP 2023195366
(71) Applicant: JUKI Corporation, Tama-shi, Tokyo 206-8551 (JP)
(72) Inventor: ATSUMI, Tadashi, Tama-shi, Tokyo 206-8551 (JP); YAMADA, Miki, Tama-shi, Tokyo 206-8551 (JP); OKAMURA, Masahiko, Tama-shi, Tokyo 206-8551 (JP)
(74) Representative: Hoeger, Stellrecht & Partner Patentanwälte mbB
(86) International application number: PCT/JP2024/038745
(87) International publication number: WO 2025/095012

(57) **Abstract**

A sewing management system (1) includes a defect cause storage unit (61) configured to store a plurality of defect items that are items of a defect cause in a sewing target (100) sewn by a worker using a sewing machine (2); an input data acquisition unit (62) configured to acquire input data indicating the defect cause from an input device (14); a processing unit (63) configured to classify the input data for each of the defect items; and an output unit (64) configured to output the classified input data.

## Description

### TECHNICAL FIELD

The present disclosure relates to a sewing management system and a sewing management method.

### BACKGROUND ART

In a technical field related to a sewing management system, a sewing management system as disclosed in Patent Literature 1 is known.

### CITATION LIST

### PATENT LITERATURE

Patent Literature 1: JP2020-168056A

### SUMMARY OF INVENTION

### TECHNICAL PROBLEM

A sewing target sewn in a sewing step is inspected in an inspection step. When the sewing target is determined to have a defect in the inspection step, it is necessary to analyze a defect cause.

An object of the present disclosure is to provide data for analyzing a defect cause in a sewing target.

### SOLUTION TO PROBLEM

A sewing management system according to the present disclosure includes a defect cause storage unit configured to store a plurality of items of a defect cause in a sewing target sewn by a worker using a sewing machine; an input data acquisition unit configured to acquire input data indicating the defect cause from an input device; a processing unit configured to classify the input data for each of the defect items; and an output unit configured to output the classified input data.

### ADVANTAGEOUS EFFECTS OF INVENTION

According to the sewing management system of the present disclosure, it is possible to provide data for analyzing the defect cause in the sewing target.

### BRIEF DESCRIPTION OF DRAWINGS

[Fig. 1] Fig. 1 is a diagram schematically showing a sewing management system according to an embodiment.
[Fig. 2] Fig. 2 is a hardware configuration diagram showing a management controller according to the embodiment.
[Fig. 3] Fig. 3 is a functional block diagram showing a management device, a sewing machine, and an information terminal according to the embodiment.
[Fig. 4] Fig. 4 is a diagram showing the information terminal in an inspection step according to the embodiment.
[Fig. 5] Fig. 5 is a flowchart showing an inspection step according to the embodiment.
[Fig. 6] Fig. 6 is a diagram showing an example of a display device that displays defective portions and the number of defects according to the embodiment.
[Fig. 7] Fig. 7 is a diagram showing an example of the display device that displays correlation data of the defective portion, a defect cause, and evaluation items related to sewing according to the embodiment.
[Fig. 8] Fig. 8 is a diagram showing an example of the display device that displays one of the evaluation items and defect rates according to the embodiment.

### DESCRIPTION OF EMBODIMENTS

Hereinafter, embodiments according to the present disclosure will be described with reference to the drawings, but the present disclosure is not limited to the embodiments. The components of the embodiments described below can be appropriately combined. A part of the components may not be used.

### [Sewing Management System]

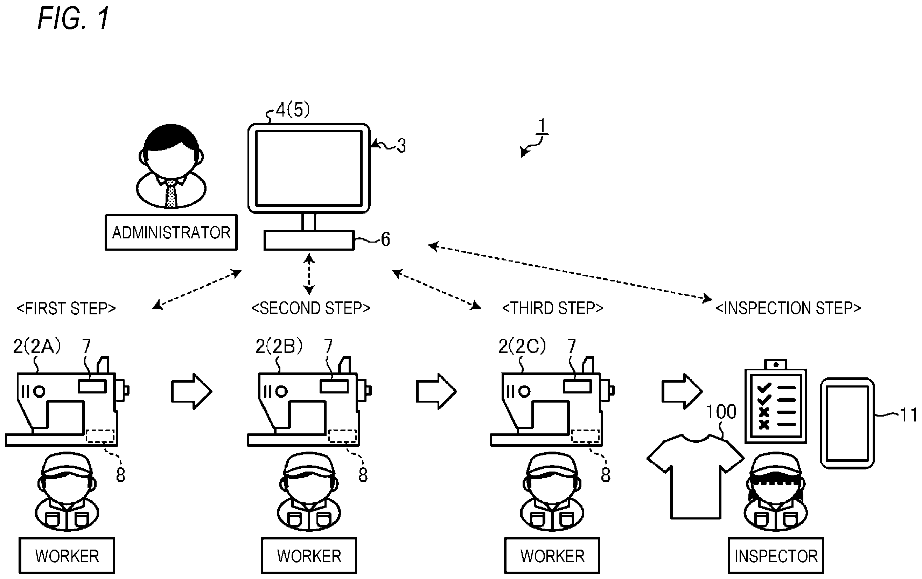

Fig. 1 is a diagram schematically showing a sewing management system 1 according to an embodiment. The sewing management system 1 includes a management device 3 that manages a production process of a sewn product. The production process includes sewing steps of sewing a sewing target 100 using sewing machines 2, and an inspection step of inspecting the sewing target 100 sewn in the sewing steps. Each of the sewing machines 2 is an industrial sewing machine. The sewn product is produced in a production line including the sewing machines 2. A plurality of sewing machines 2 are installed in the production line. The production line is installed in a sewing factory. The sewing machines 2 operate in the sewing factory. The sewing target 100 is sewn by the sewing machines 2 to produce the sewn product. In the embodiment, the management device 3 is installed in the sewing factory. The management device 3 may be installed outside the sewing factory.

In the sewing steps, the sewing target 100 is sewn by the sewing machines 2 to produce the sewn product. Examples of the sewing target include fabric. Examples of the sewn product include clothes.

In the sewing factory, a plurality of types of sewing machines 2 corresponding to applications are installed. In the sewing factory, a plurality of types of sewing machines 2 are installed to correspond to a plurality of sewing steps for producing the sewn product. Examples of the type of the sewing machine 2 include a lockstitch sewing machine for sewing a body part, a button sewing machine for attaching a button to the body part, and a pocket sewing machine for attaching a pocket to the body part. In one sewing factory, many sewing machines 2 of various types are installed. In order to simplify the description, three sewing machines 2 are shown in Fig. 1. A first sewing machine 2A is used in a first step for producing the sewn product. A second sewing machine 2B is used in a second step for producing the sewn product. A third sewing machine 2C is used in a third step for producing the sewn product. In the sewing factory, a plurality of sewing machines 2 of one type may be installed.

In the sewing factory, an administrator, workers, and an inspector work. The administrator manages the workers, the inspector, and the sewing machines 2. The workers sew the sewing target 100 using the sewing machines 2 in the sewing steps. The inspector inspects the sewing target 100 sewn by the sewing machines 2 in the inspection step. Each of the administrator, the worker, and the inspector may be regarded as a user of the sewing machine 2. The number of administrators may be one or may be multiple. The number of workers may be multiple or may be one. For example, one worker may operate a plurality of sewing machines 2. The number of inspectors may be multiple or may be one.

The management device 3 includes a display device 4, an input device 5, and a management controller 6. The display device 4 displays display data. The display device 4 includes a flat panel display, such as a liquid crystal display or an organic EL display. The input device 5 is operated by the administrator to generate input data. The input device 5 may be operated by the worker or an operator. The input device 5 includes a touch panel (touch sensor) disposed on a display screen of the display device 4. The input device 5 may be a computer keyboard, a mouse, or a voice input device. The management controller 6 includes a computer system. The management controller 6 includes at least one processor and a main memory that stores a computer program executable by the processor.

Each of the sewing machines 2 includes an operation panel 7 and a sewing machine controller 8. The operation panel 7 is operated by the worker to generate operation data. The operation panel 7 includes a touch panel (touch sensor) disposed on a display screen of a display. The sewing machine controller 8 includes a computer system. The sewing machine controller 8 includes at least one processor and a main memory that stores a computer program executable by the processor.

The inspector inspects the sewing target 100 in the inspection step. The inspection for the sewing target 100 includes an intermediate inspection for inspecting the sewing target 100 for which a part of the sewing steps is ended, and a final inspection for inspecting the sewing target for which all of the sewing steps are ended. The inspector carries an information terminal 11. Examples of the information terminal 11 include a tablet terminal and a smartphone.

The management device 3 is shared by the plurality of sewing machines 2 and the information terminal 11 in the sewing factory. The number of management devices 3 is less than the number of sewing machines 2. The management device 3 can communicate with the sewing machines 2 and the information terminal 11. The management controller 6 of the management device 3 communicates with the sewing machine controller 8 of the sewing machine 2 and the information terminal 11. The management controller 6, the sewing machine controller 8, and the information terminal 11 wirelessly communicate with each other. The management controller 6, the sewing machine controller 8, and the information terminal 11 wirelessly communicate with each other via a local area network (LAN). Examples of the wireless LAN include Wifi (registered trademark). The management controller 6, the sewing machine controller 8, and the information terminal 11 may wirelessly communicate with each other via a personal area network (PAN). Examples of the wireless PAN include Bluetooth (registered trademark).

The management controller 6 transmits a control command to the sewing machine controller 8 of the sewing machine 2 based on the input data generated by operating the input device 5.

The sewing machine controller 8 transmits the operation data of the sewing machine 2 to the management controller 6. The operation data of the sewing machine 2 includes operation conditions of the sewing machine 2. The operation conditions of the sewing machine 2 include at least one of a seam length, a seam pitch, a seam pattern, a feed speed of a sewing object, the number of stitches, a thread tension, or a pressing pressure on the sewing object. The sewing machine controller 8 monitors the operation conditions of the sewing machine 2. The sewing machine 2 is provided with a sensor that detects each of the operation conditions of the sewing machine 2. Examples of the sensor include a tension sensor that detects the thread tension and a pressing pressure sensor that detects the pressing pressure on the sewing object. The sewing machine controller 8 can monitor the operation conditions of the sewing machine 2 by acquiring detection data of the sensor. The sewing machine 2 includes a sewing machine motor for operating a needle bar and a thread take-up lever. The sewing machine controller 8 can monitor the operation conditions of the sewing machine 2 by acquiring a drive signal of the sewing machine motor. The operation data of the sewing machine 2 indicates an operation history of the sewing machine 2. The operation history of the sewing machine 2 includes at least one of an operation date and time of the sewing machine 2, a continuous operation time of the sewing machine 2, a cumulative operation time of the sewing machine 2, a type of a sewing target sewn by the sewing machine 2, the number of stitches during the sewing, error information generated in the sewing machine 2, or the worker who operates the sewing machine 2.

The management controller 6 collects the operation data of each of the plurality of sewing machines 2. The management controller 6 displays, on the display device 4, the operation data of each of the plurality of sewing machines 2.

The inspector operates an input device of the information terminal 11 to input an inspection result for the sewing target 100 to the information terminal 11. The information terminal 11 transmits inspection data indicating the inspection result for the sewing target 100 to the management controller 6.

The management controller 6 transmits guidance data indicating inspection items and inspection methods of the sewing target 100 to the information terminal 11. The guidance data is displayed on the display of the information terminal 11. The inspector inspects the sewing target 100 while checking the guidance data displayed on the display.

### [Computer System]

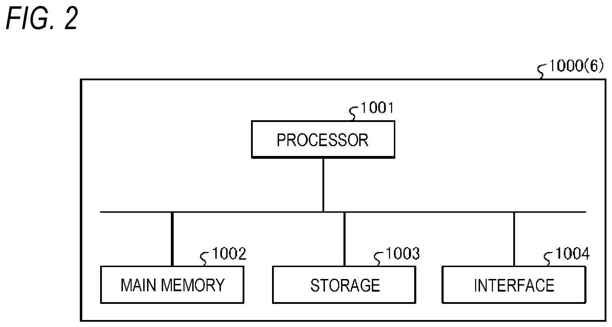

Fig. 2 is a hardware configuration diagram showing the management controller 6 according to the embodiment. The management controller 6 includes a computer system 1000. The computer system 1000 includes a processor 1001 such as a central processing unit (CPU), a main memory 1002 including a nonvolatile memory such as a read only memory (ROM) and a volatile memory such as a random access memory (RAM), a storage 1003, and an interface 1004 including an input/output circuit. A function of the management controller 6 is stored in the storage 1003 as a computer program. The processor 1001 reads the computer program from the storage 1003, loads the computer program into the main memory 1002, and executes processing according to the computer program. The computer program may be distributed to the computer system 1000 via a network.

Similarly, each of the sewing machine controller 8 and the information terminal 11 includes a computer system including a processor, a main memory, a storage, and an interface.

### [Management Device, Sewing Machine, and Information Terminal]

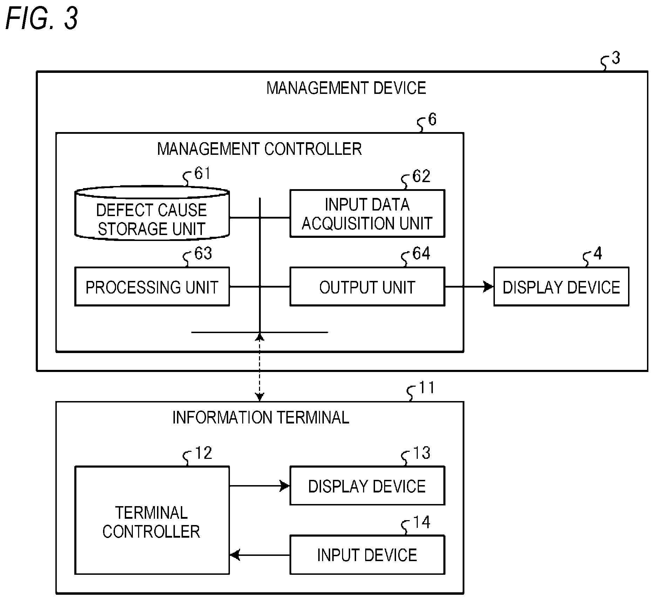

Fig. 3 is a functional block diagram showing the management device 3, the sewing machine 2, and the information terminal 11 according to the embodiment. As shown in Fig. 3, the information terminal 11 includes a terminal controller 12, a display device 13 such as a flat panel display, and an input device 14 such as a touch panel. The input device 14 is operated by the inspector to generate input data. The input device 14 may be operated by the worker or the administrator. The terminal controller 12 transmits the input data generated by operating the input device 14 to the management controller 6.

The management controller 6 includes a defect cause storage unit 61, an input data acquisition unit 62, a processing unit 63, and an output unit 64.

The defect cause storage unit 61 stores a plurality of defect items that are items of defect causes of the sewing target 100 sewn by the worker using the sewing machine 2. Each of the defect items indicating an item of the defect cause is determined in advance. In the embodiment, the defect items include a first item indicating that the sewing machine 2 is the defect cause, a second item indicating that the worker is the defect cause, and a third item indicating that the sewing target 100 is the defect cause. The defect cause related to the first item may be regarded as a mechanical defect cause. The defect cause related to the second item may be regarded as an operator-related defect cause. The defect cause related to the third item may be regarded as a material defect item.

Examples of the defect cause related to the first item include an abnormality in a seam formed on the sewing target 100. Examples of the abnormality in the seam include an abnormality called "stitch skipping" in which at least a length of one seam is long, an abnormality called "thread breakage" in which at least a part of the seam disappears, and an abnormality called "thread looping" in which at least one of an upper thread or a lower thread is loosened in the sewing target. A defect related to the first item is a defect caused by the sewing machine 2, such as an adjustment failure or a setting failure of the sewing machine 2.

Examples of the defect cause related to the second item include an abnormality in the seam formed on the sewing target 100. Examples of the abnormality in the seam include meandering of the seam, absence of the seam, and deviation of the seam from the sewing target 100. Examples of the defect cause related to the second item include a mix-up of the sewing target 100 and a mix-up of the thread. A defect related to the second item is a defect caused by the worker, such as insufficient skill or carelessness of the worker.

Examples of the defect cause related to the third item include a defect of the sewing target 100 itself. Examples of the defect of the sewing target 100 itself include scratches, color unevenness, and dirt present in the sewing target 100. A defect related to the third item is a defect caused by the sewing target 100.

The input data acquisition unit 62 acquires, from the information terminal 11, the input data generated by the input device 14 of the information terminal 11. When a defect is present in the sewing target 100, the inspector operates the input device 14 to input that a defect is present in the sewing target 100. The inspector operates the input device 14 to input the defect cause. The inspector operates the input device 14 to input a defective portion of the sewing target 100. The input data acquisition unit 62 acquires, from the information terminal 11, the input data indicating that the defect is present in the sewing target 100. The input data acquisition unit 62 acquires, from the information terminal 11, the input data indicating the defect cause in the sewing target 100. The input data acquisition unit 62 acquires, from the information terminal 11, the input data indicating the defective portion of the sewing target 100.

The processing unit 63 calculates a defect rate for each of a plurality of evaluation items related to the sewing based on the input data acquired by the input data acquisition unit 62. The evaluation items include at least one of a product number of the sewing target 100, a step of the sewing, a time of the sewing (a sewing time point, a sewing time zone), or the worker.

Further, the processing unit 63 classifies the input data indicating the defect cause for each of the plurality of defect items based on the input data indicating the defect cause acquired by the input data acquisition unit 62.

Further, the processing unit 63 counts the number of defects in the same portion in the plurality of sewing targets having the same design based on the input data indicating the defective portion acquired by the input data acquisition unit 62.

The output unit 64 outputs the defect rate calculated by the processing unit 63 to the display device 4. The output unit 64 displays, on the display device 4, the input data indicating the defect cause classified by the processing unit 63. The output unit 64 displays, on the display device 4, the defective portion based on the input data indicating the defective portion acquired by the input data acquisition unit 62. The output unit 64 may output the input data indicating the defect cause classified by the processing unit 63 to the defect cause storage unit 61 to store the input data.

### [Sewing Management Method]

Next, a sewing management method according to the embodiment will be described. As described above, in the sewing factory, each of a plurality of workers sews a plurality of sewing targets 100 using a plurality of sewing machines 2. In the sewing factory, a plurality of sewing targets 100 having the same design may be sequentially sewn using the sewing machines 2. In the following description, an example in which each of the plurality of sewing targets 100 having the same design is sequentially inspected in the inspection step will be described. In the following description, it is assumed that the sewing target 100 is a fabric for producing a T-shirt.

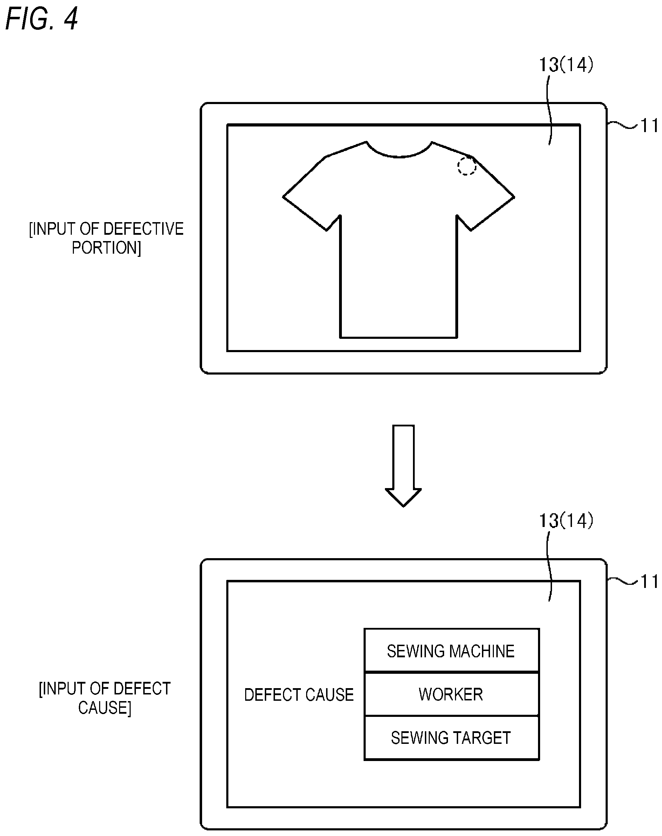

Fig. 4 is a diagram showing the information terminal 11 in the inspection step according to the embodiment. In the inspection step, the inspector inspects the sewing target 100 using the information terminal 11. When a defect is present in the sewing target 100, the inspector operates the input device 14 to input that a defect is present in the sewing target 100. As shown in Fig. 4, a first display screen for inputting the defective portion of the sewing target 100 is displayed on the display device 13 of the information terminal 11. The first display screen includes an image of the sewing target 100. The inspector operates the input device 14 to input the defective portion of the sewing target 100. The input device 14 includes a touch panel. For example, when a defect is present in a shoulder portion of the sewing target 100, the inspector taps a shoulder portion of the image of the sewing target 100 displayed on the display device 13.

After the defective portion of the sewing target 100 is input, the display screen of the display device 13 transitions from the first display screen for inputting the defective portion to a second display screen for inputting the defect cause. The inspector operates the input device 14 to input the defect cause in the sewing target 100. A plurality of defect items are displayed on the display device 13. As shown in Fig. 4, the display device 13 displays characters "sewing machine" indicating the first item, characters "worker" indicating the second item, and characters "sewing target" indicating the third item.

When it is determined that at least one of the "stitch skipping", the "thread breakage", or the "thread looping" is present in the shoulder portion of the sewing target 100, the inspector determines that the defect cause is the sewing machine and taps the "sewing machine" on the display device 13. Thus, the input data indicating that the defect cause is the sewing machine 2 is transmitted from the terminal controller 12 to the management controller 6.

When it is determined that at least one of the meandering of the seam, the absence of the seam, or the deviation of the seam from the sewing target 100 is present in the shoulder portion of the sewing target 100, the inspector determines that the defect cause is the worker and taps the "worker" on the display device 13. Thus, the input data indicating that the defect cause is the worker is transmitted from the terminal controller 12 to the management controller 6.

When it is determined that at least one of the scratches, the color unevenness, or the dirt of the sewing target 100 is present in the shoulder portion of the sewing target 100, the inspector determines that the defect cause is the sewing target, and taps the "sewing target" on the display device 13. Thus, the input data indicating that the defect cause is the sewing target is transmitted from the terminal controller 12 to the management controller 6.

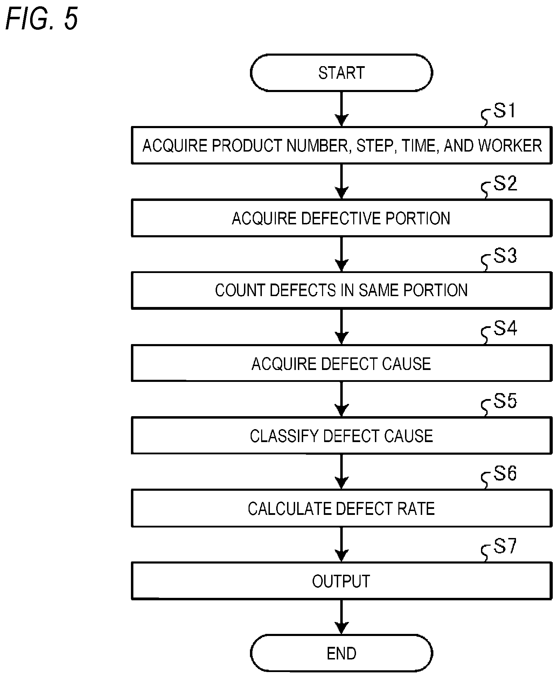

Fig. 5 is a flowchart showing the inspection step according to the embodiment. The inspector operates the input device 14 to input the product number of the sewing target 100 to be inspected, the sewing step through which the sewing target 100 has passed, the sewing time (the sewing time point, the sewing time zone) during which the sewing target 100 has been sewn, and the worker who has sewn the sewing target 100. When the inspection step is performed after the first step, the sewing step through which the sewing target 100 has passed is the first step. When the inspection step is performed after the second step or the third step, the sewing step through which the sewing target 100 has passed is the second step or the third step. The input data indicating each of the product number of the sewing target 100, the sewing step, the sewing time, and the worker is transmitted from the terminal controller 12 to the management controller 6. The input data acquisition unit 62 acquires the input data indicating each of the product number of the sewing target 100, the sewing step, the sewing time, and the worker (step S1).

Next, as described with reference to Fig. 4, the worker inputs the defective portion of the sewing target 100. The input data indicating the defective portion of the sewing target 100 is transmitted from the terminal controller 12 to the management controller 6. The input data acquisition unit 62 acquires the input data indicating the defective portion of the sewing target 100 (step S2).

In the embodiment, the input data acquisition unit 62 acquires, from the input device 14, the input data indicating the defective portion of each of the plurality of sewing targets 100 having the same design sewn by the workers using the sewing machines 2. The processing unit 63 counts the number of defects in the same portion in the plurality of sewing targets 100 based on the input data indicating the defective portion (step S3).

Next, as described with reference to Fig. 4, the worker inputs the defect cause in the sewing target 100. The input data indicating the defect cause in the sewing target 100 is transmitted from the terminal controller 12 to the management controller 6. The input data acquisition unit 62 acquires the input data indicating the defect cause in the sewing target 100 (step S4).

The processing unit 63 classifies the input data indicating the defect cause for each of the defect items stored in the defect cause storage unit 61 (step S5).

The processing unit 63 calculates the defect rate for each of the plurality of evaluation items related to the sewing based on the input data indicating the defective portion (step S6).

The output unit 64 outputs the defective portion acquired in step S2, the number of defects counted in step S3, the defect cause classified in step S5, and the defect rate calculated in step S6 to the display device 4 (step S7).

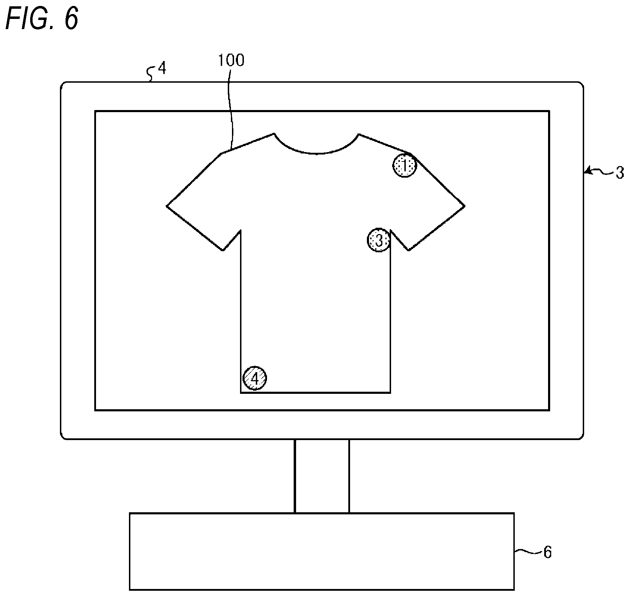

Fig. 6 is a diagram showing an example of the display device 4 that displays the defective portions and the number of defects according to the embodiment. As shown in Fig. 6, the image of the sewing target 100 is displayed on the display device 4. The output unit 64 displays first symbols each indicating the defective portion on the image of the sewing target 100 in a superimposed manner on the display device. In the example shown in Fig. 6, the first symbol is a circular mark. Fig. 6 shows an example in which the defective portion is found in each of the shoulder portion, a side portion, and a hem portion of the sewing target 100.

Further, the output unit 64 displays second symbols each indicating the number of defects in the same portion on the image of the sewing target 100 in a superimposed manner on the display device 4. In the example shown in Fig. 6, the second symbol is numerical data superimposed on the first symbol. Fig. 6 shows an example in which the number of defects in the shoulder portion of the sewing target 100 is "1", the number of defects in the side portion is "3", and the number of defects in the hem portion is "4".

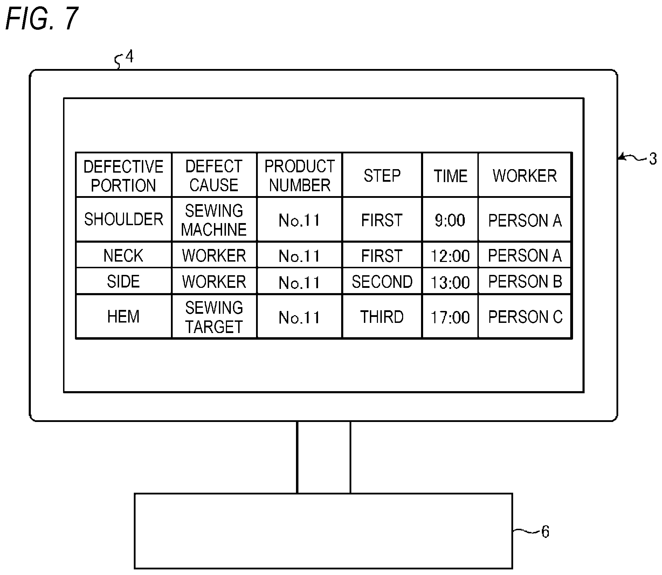

Fig. 7 is a diagram showing an example of the display device 4 that displays correlation data of the defective portion, the defect cause, and the evaluation items related to the sewing according to the embodiment. As shown in Fig. 7, the output unit 64 displays, on the display device 4, the input data indicating the defect cause for each of the plurality of defect items. For example, when the input data indicating that the defect cause is the sewing machine 2 is transmitted from the terminal controller 12 to the management controller 6, the output unit 64 displays, on the display device 4, that the defect cause is the sewing machine 2. As shown in Fig. 7, the output unit 64 displays, on the display device 4, the correlation data of the defective portion, the defect cause, and the evaluation items related to the sewing. As described above, the evaluation items include at least one of the product number of the sewing target 100, the step of the sewing, the time of the sewing, or the worker.

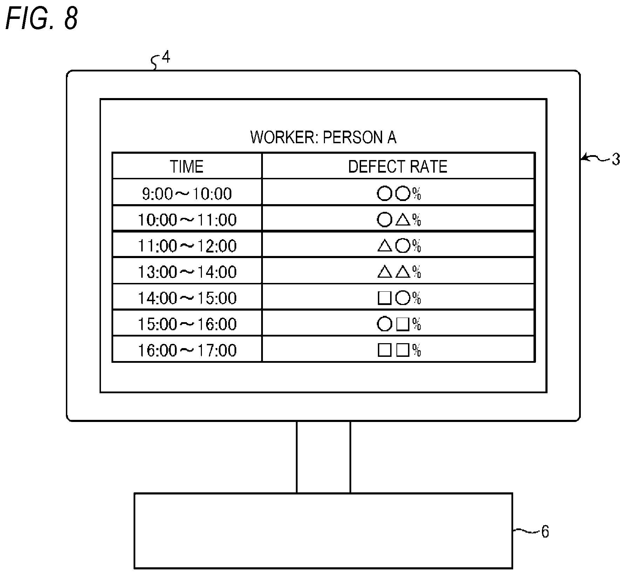

Fig. 8 is a diagram showing an example of the display device 4 that displays one of the evaluation items and the defect rates according to the embodiment. The processing unit 63 calculates the defect rate for each of the evaluation items related to the sewing based on the input data indicating the defect of each of the plurality of sewing targets 100 sewn by the plurality of workers using the plurality of sewing machines 2. The output unit 64 displays a relationship between the evaluation item and the defect rate on the display device 4. Fig. 8 is a diagram showing a relationship between the sewing time (sewing time zone) and the defect rate. The output unit 64 may output a relationship between a plurality of product numbers and defect rates of the plurality of product numbers, may output a relationship between a plurality of sewing steps and defect rates of the plurality of sewing steps, or may output a relationship between a plurality of workers and defect rates of the plurality of workers.

### [Advantageous Effects]

As described above, according to the embodiment, the sewing management system 1 includes the defect cause storage unit 61 configured to store a plurality of defect items that are items of the defect cause in the sewing target 100 sewn by the worker using the sewing machine 2; the input data acquisition unit 62 configured to acquire the input data indicating the defect cause from the input device 14; the processing unit 63 configured to classify the input data indicating the defect cause for each of the defect items; and the output unit 64 configured to output the classified input data indicating the defect cause.

According to the embodiment, after the defect cause found in the inspection step is specified by the inspector, the defect cause specified by the inspector is classified into a predetermined defect item. Since the defect cause is classified, for example, the administrator can analyze the defect cause in the sewing target based on the classified defect cause. The defect cause classified into a plurality of defect items is used as useful data when analyzing the defect cause in the sewing target.

The input data related to the defect cause is displayed on the display device 4 for each of the plurality of defect items. The administrator can analyze the defect cause in the sewing target based on the defect cause displayed for each of the plurality of defect items.

The defect items include the first item indicating that the sewing machine 2 is the defect cause, the second item indicating that the worker is the defect cause, and the third item indicating that the sewing target 100 is the defect cause. Accordingly, the administrator can efficiently specify the defect cause.

According to the embodiment, the sewing management system 1 includes the input data acquisition unit 62 configured to acquire, from the input device 14, the input data indicating a defect of each of the plurality of sewing targets 100 sewn by the plurality of workers using the plurality of sewing machines 2; the processing unit 63 configured to calculate the defect rate for each of the plurality of evaluation items related to the sewing based on the input data indicating the defect; and the output unit 64 configured to output the defect rate.

According to the embodiment, when the defect is found in the inspection step, the defect rate is calculated for each of the plurality of evaluation items and displayed on the display device 4. Since the defect rate indicating a ratio of a defective sewing target 100 to the plurality of sewing targets 100 is calculated, the administrator can analyze the defect cause in the sewing target 100 based on the calculated defect rate. The defect rate is used as useful data when analyzing the defect cause in the sewing target 100.

The evaluation items include at least one of the product number of the sewing target 100, the step of the sewing, the time of the sewing, or the worker. Thus, the administrator can easily specify the defect cause.

According to the embodiment, the sewing management system 1 includes the input data acquisition unit 62 configured to acquire, from the input device 14, the input data indicating the defective portion of each of the plurality of sewing targets 100 having the same design and sewn by the worker using the sewing machine 2; and the output unit 64 configured to display the first symbol indicating the defective portion on the image of the sewing target 100 in a superimposed manner on the display device 4.

According to the embodiment, after the defective portion found in the inspection step is specified by the inspector, the first symbol indicating the defective portion specified by the inspector is displayed on the display device 4 in a state of being superimposed on the image of the sewing target 100. Since the defective portion is specified, the administrator can analyze the defect cause in the sewing target 100 based on the specified defective portion. The defective portion of the sewing target 100 is used as useful data when analyzing the defect cause in the sewing target 100. Further, since the first symbol indicating the defective portion is displayed on the display device 4 in a state of being superimposed on the image of the sewing target 100, the administrator can intuitively recognize the defective portion.

The processing unit 63 counts the number of defects in the same portion in the plurality of sewing targets 100 based on the input data indicating the defective portion. Thus, the administrator can easily specify the defect cause. For example, when the number of defects in the hem portion is large, there is a possibility that there is a problem in the sewing machine 2 for sewing the hem portion or there is a problem in the skill of the worker who sews the hem portion. The administrator can maintain the sewing machine 2 for sewing the hem portion and take measures to improve the skill of the worker who sews the hem portion. Further, since the second symbol indicating the number of defects is displayed on the display device 4 in a state of being superimposed on the image of the sewing target 100, the administrator can intuitively recognize the defective portion having a large number of defects.

Since the correlation data between the defective portion and the evaluation items related to the sewing is displayed on the display device 4, for example, the administrator can analyze the defect cause in the sewing target 100 based on the correlation data.

The correlation data includes a time of sewing using the sewing machine 2 and the worker. Thus, the administrator can easily specify the defect cause.

### [Another Embodiment]

In the above embodiment, the sewing machine controller 8 transmits the operation data of the sewing machine 2 to the management controller 6. The processing unit 63 may collect the operation data of each of the plurality of sewing machines 2. As described above, the operation data of the sewing machine 2 includes the operation conditions of the sewing machine 2 and the operation history of the sewing machine 2. The output unit 64 may output and display the input data indicating the defect cause classified by the processing unit 63 to the display device 4 in association with the operation data of the sewing machine 2. As described with reference to Fig. 7, the display data associated with the defect cause being the operation condition of the sewing machine 2 (for example, the pressing pressure) may be displayed on the display device 4, or the display data associated with the defect cause being the operation history of the sewing machine 2 (for example, the type of the sewing target or the worker who operates the sewing machine 2) may be displayed on the display device 4. By outputting the classified defect cause in association with the operation condition of the sewing machine 2, for example, the administrator can analyze the defect cause of the sewing target. Similarly, by outputting the classified defect cause in association with the operation history of the sewing machine 2, for example, the administrator can analyze the defect cause of the sewing target. The output unit 64 may output and store the input data indicating the defect cause classified by the processing unit 63 to the defect cause storage unit 61 in association with the operation data of the sewing machine 2.

The present disclosure includes the following aspects.
(1) A sewing management system including:
   a defect cause storage unit configured to store a plurality of defect items that are items of a defect cause in a sewing target sewn by a worker using a sewing machine;
   an input data acquisition unit configured to acquire input data indicating the defect cause from an input device;
   a processing unit configured to classify the input data for each of the defect items; and
   an output unit configured to output the classified input data.
(2) The sewing management system according to (1), in which
   the output unit displays, on a display device, or stores, in the defect cause storage unit, the input data for each of the plurality of defect items.
(3) The sewing management system according to (1), in which
   the defect items include a first item indicating that the sewing machine is the defect cause, a second item indicating that the worker is the defect cause, and a third item indicating that the sewing target is the defect cause.
(4) The sewing management system according to (1), in which
   the input data acquisition unit collects operation data of the sewing machine, and
   the output unit outputs the classified input data in association with the operation data.
(5) The sewing management system according to (4), in which
   the output unit displays, on a display device, or stores, in the defect cause storage unit, the input data in association with the operation data.
(6) The sewing management system according to (4), in which
   the operation data includes an operation condition of the sewing machine and an operation history of the sewing machine.
(7) The sewing management system according to (6), in which
   the operation condition of the sewing machine includes at least one of a seam length, a seam pitch, a seam pattern, a feed speed of a sewing object, the number of stitches, a thread tension, or a pressing pressure on the sewing object.
(8) The sewing management system according to (6), in which
   the operation history of the sewing machine includes at least one of an operation date and time of the sewing machine, a continuous operation time of the sewing machine, a cumulative operation time of the sewing machine, a type of the sewing target sewn by the sewing machine, the number of stitches during sewing, error information generated in the sewing machine, or the worker who operates the sewing machine.
(9) A sewing management method including:
   storing a plurality of defect items that are items of a defect cause in a sewing target sewn by a worker using a sewing machine;
   acquiring input data indicating the defect cause from an input device;
   classifying the input data for each of the defect items; and
   outputting the classified input data.
(10) A sewing management system including:
   an input data acquisition unit configured to acquire, from an input device, input data indicating a defect of each of a plurality of sewing targets sewn by a plurality of workers using a plurality of sewing machines;
   a processing unit configured to calculate a defect rate for each of a plurality of evaluation items related to the sewing based on the input data; and
   an output unit configured to output the defect rate.
(11) The sewing management system according to (10), in which
   the evaluation items include at least one of a product number of the sewing target, a step of the sewing, a time of the sewing, or the worker.
(12) A sewing management method including:
   acquiring, from an input device, input data indicating a defect of each of a plurality of sewing targets sewn by a plurality of workers using a plurality of sewing machines;
   calculating a defect rate for each of a plurality of evaluation items related to the sewing based on the input data; and
   outputting the defect rate.
(13) A sewing management system including:
   an input data acquisition unit configured to acquire, from an input device, input data indicating a defective portion of each of a plurality of sewing targets having the same design and sewn by a worker using a sewing machine; and
   an output unit configured to display a first symbol indicating the defective portion on an image of the sewing target in a superimposed manner on a display device.
(14) The sewing management system according to (13), further including:
   a processing unit configured to count the number of defects in the same portion in the plurality of sewing targets based on the input data, in which
   the output unit displays a second symbol indicating the number of defects on the image of the sewing target in a superimposed manner on the display device.
(15) The sewing management system according to (13), further including:
   a processing unit configured to generate correlation data between the defective portion and an evaluation item related to the sewing, in which
   the output unit displays the correlation data on the display device.
(16) The sewing management system according to (15), in which
   the correlation data includes the worker and a time of sewing using the sewing machine.
(17) A sewing management method including:
   acquiring, from an input device, input data indicating a defective portion of each of a plurality of sewing targets having the same design and sewn by a worker using a sewing machine; and
   displaying a first symbol indicating the defective portion on an image of the sewing target in a superimposed manner on a display device.

The present application is based on Japanese Patent Application No. 2023-187515 filed on November 1, 2023, Japanese Patent Application No. 2023-187516 filed on November 1, 2023, and Japanese Patent Application No. 2023-195366 filed on November 16, 2023, the contents of which are incorporated herein by reference.

## Claims

1. A sewing management system comprising:
a defect cause storage unit configured to store a plurality of defect items that are items of a defect cause in a sewing target sewn by a worker using a sewing machine;
an input data acquisition unit configured to acquire input data indicating the defect cause from an input device;
a processing unit configured to classify the input data for each of the defect items; and
an output unit configured to output the classified input data.

2. The sewing management system according to claim 1, wherein
the output unit displays, on a display device, or stores, in the defect cause storage unit, the input data for each of the plurality of defect items.

3. The sewing management system according to claim 1, wherein
the defect items include a first item indicating that the sewing machine is the defect cause, a second item indicating that the worker is the defect cause, and a third item indicating that the sewing target is the defect cause.

4. The sewing management system according to claim 1, wherein
the input data acquisition unit collects operation data of the sewing machine, and
the output unit outputs the classified input data in association with the operation data.

5. The sewing management system according to claim 4, wherein
the output unit displays, on a display device, or stores, in the defect cause storage unit, the input data in association with the operation data.

6. The sewing management system according to claim 4, wherein
the operation data includes an operation condition of the sewing machine and an operation history of the sewing machine.

7. The sewing management system according to claim 6, wherein
the operation condition of the sewing machine includes at least one of a seam length, a seam pitch, a seam pattern, a feed speed of a sewing object, the number of stitches, a thread tension, or a pressing pressure on the sewing object.

8. The sewing management system according to claim 6, wherein
the operation history of the sewing machine includes at least one of an operation date and time of the sewing machine, a continuous operation time of the sewing machine, a cumulative operation time of the sewing machine, a type of the sewing target sewn by the sewing machine, the number of stitches during sewing, error information generated in the sewing machine, or the worker who operates the sewing machine.

9. A sewing management method comprising:
storing a plurality of defect items that are items of a defect cause in a sewing target sewn by a worker using a sewing machine;
acquiring input data indicating the defect cause from an input device;
classifying the input data for each of the defect items; and
outputting the classified input data.

10. A sewing management system comprising:
an input data acquisition unit configured to acquire, from an input device, input data indicating a defect of each of a plurality of sewing targets sewn by a plurality of workers using a plurality of sewing machines;
a processing unit configured to calculate a defect rate for each of a plurality of evaluation items related to the sewing based on the input data; and
an output unit configured to output the defect rate.

11. The sewing management system according to claim 10, wherein
the evaluation items include at least one of a product number of the sewing target, a step of the sewing, a time of the sewing, or the worker.

12. A sewing management method comprising:
acquiring, from an input device, input data indicating a defect of each of a plurality of sewing targets sewn by a plurality of workers using a plurality of sewing machines;
calculating a defect rate for each of a plurality of evaluation items related to the sewing based on the input data; and
outputting the defect rate.

13. A sewing management system comprising:
an input data acquisition unit configured to acquire, from an input device, input data indicating a defective portion of each of a plurality of sewing targets having the same design and sewn by a worker using a sewing machine; and
an output unit configured to display a first symbol indicating the defective portion on an image of the sewing target in a superimposed manner on a display device.

14. The sewing management system according to claim 13, further comprising:
a processing unit configured to count the number of defects in the same portion in the plurality of sewing targets based on the input data, wherein
the output unit displays a second symbol indicating the number of defects on the image of the sewing target in a superimposed manner on the display device.

15. The sewing management system according to claim 13, further comprising:
a processing unit configured to generate correlation data between the defective portion and an evaluation item related to the sewing, wherein
the output unit displays the correlation data on the display device.

16. The sewing management system according to claim 15, wherein
the correlation data includes the worker and a time of sewing using the sewing machine.

17. A sewing management method comprising:
acquiring, from an input device, input data indicating a defective portion of each of a plurality of sewing targets having the same design and sewn by a worker using a sewing machine; and
displaying a first symbol indicating the defective portion on an image of the sewing target in a superimposed manner on a display device.
